# EUROPEAN PATENT APPLICATION

(11) **EP 1 523 076 A1**
(43) Date of publication of application: **13.04.2005**
(21) Application number: 03292506.7
(22) Date of filing: 10.10.2003
(51) Int. Cl.: H01S 3/30, H01S 3/067, H01S 3/08

(54) **Raman laser with a simplified structure of wavelength selectors**

(71) Applicant: ALCATEL, 75008 Paris (FR)
(72) Inventor: Borne, Sophie, 91590 d'Huison Longueville (FR); De Barros, Carlos, 92100 Boulogne-Billancourt (FR); Leplingard, Florence, 75350 Juuy en Josas (FR)
(74) Representative: Schäfer, Wolfgang, Dipl.-Ing.

(57) **Abstract**

The present invention relates to a Raman laser comprising a Raman fiber (10), wherein said Raman fiber (10) comprises a plurality of wavelength selectors (16, 18, 20, 22, 24, 26, 28, 30) for closing a plurality of laser cavities (32, 34, 36, 38, 40).

Some laser cavities (38, 40) have a single common first wavelength selector (44) so as to reduce the number of wavelength selectors. The present invention further relates to a method of manufacturing a Raman laser.

## Description

The present invention relates to a Raman laser comprising a Raman fiber and a plurality of wavelength selectors or filter elements that close laser cavities embedded in said Raman fiber at opposing first and second sides, respectively.

Further, the present invention generally relates to a method of manufacturing a Raman laser comprising a Raman fiber and in particular to a method to simplify and improve the manufacturing of a Raman laser, said method comprising the steps of: providing a plurality of wavelength selectors that close laser cavities embedded in said Raman fiber at opposing first and second sides, respectively.

Raman amplification of optical signals is per se known and is based on an interaction of light with matter that is known as Raman effect or Raman interaction.

Raman interaction is an inelastic scattering process in which pump light is downshifted in frequency, thereby downshifted in photon energy by a certain amount that corresponds to excitation energies of vibrational modes of the concerned matter. Therefore, said certain amount, that is often called a Stokes, depends on properties of the matter that is involved.

In the case of solid state matter, the frequency of the scattered light may vary continuously as a function of solid state matter properties. The resulting spectrum of the scattered light is called gain spectrum. The maximum of the gain spectrum is found at a certain frequency/wavelength difference of said optical signal and said pump signal. Said frequency difference is also referred to as Stokes shift. Accordingly, pumping a first signal by using a pump signal of higher frequency with a frequency difference of one Stokes shift with respect to the first signal is usually called first-order Stokes pumping.

In stimulated Raman interaction, coupling occurs between a pump wave of higher frequency (i.e. higher energy) and a co-propagating or counter-propagating first signal wave of lower frequency (i.e. lower energy), if the frequency difference falls within the gain spectrum. Photon energy of pump light level is downshifted to signal level by stimulated emission, thereby amplifying the signal. The remaining energy, i.e. the difference between the pump light level and the signal level is absorbed in the inelastic scattering process by exciting molecular vibrations (optical phonons).

A Raman laser comprises a pump light source and at least one resonator or laser cavity. The cavity may be formed by a certain length of Raman fiber that is arranged between wavelength selective mirrors at an input side and at an output side, respectively.

If the length of fiber and the reflectivity of the wavelength selectors are chosen properly, lasing occurs in the cavity. By providing more than one pair of input/output wavelength selectors, a plurality of laser cavities may be build, in which lasing occurs at a respective plurality of frequencies.

These frequencies may lie in the gain spectrum of the pump wave, thereby corresponding to a so called first order Stokes. However, light in the first order gain spectrum may be further downshifted in frequency by the Raman effect, thereby generating Stokes of higher orders.

One or more of the cavities may select such Stokes of higher order, thereby generating a gain spectrum which comprises one or more desired lower output frequencies.

Prior art Raman lasers comprise filter elements or wavelength selectors such as Fiber Bragg Gratings to form said cavities.

Fiber Bragg Gratings are per se known as a periodic variation of the refractive index of the fiber core along the fiber.

Light propagating in the Bragg Grating is backscattered slightly by Fresnel reflection at each of the successive index perturbations. In general, the amount of backscattered light is very small except for the Bragg wavelength range, wherein the Bragg wavelength is given by the product of the modal index of the propagating mode, the grating period, and the factor two. At the Bragg wavelength, the waves reflected at each index perturbation are in phase with each other. In other words: Phase matching occurs at the Bragg wavelength and the waves that are reflected back add up coherently to a large reflected wave.

The wavelength range over which substantive back-reflection occurs, is called the spectral bandwidth of the grating.

Conventional Bragg gratings that are characterized by a constant grating period provide for a spectral bandwidth in the range of up to a few nm at -10dB. Therefore, in conventional Raman lasers, each cavity is closed by a single pair of Fiber Bragg Gratings.

It is known to generate Fiber Bragg Gratings by means of ultraviolet radiation and a corresponding phase mask.

Fiber Bragg Gratings are per se known. They can be written into an optical fiber by using a phase mask in combination with e.g. UV radiation. Said phase masks are difficult to manufacture.

Since a high number of wavelength selectors has to be manufactured in prior art laser devices, manufacturing of Raman laser devices is expensive. Further, the perturbations of the refractive index of the fiber may attenuate the propagating modes. Accordingly, it is an objective of the present invention to provide an improved Raman laser and an improved method of manufacturing a Raman laser that is less expensive and that provide less attenuation.

This objective is achieved by a Raman laser as mentioned at the outset, wherein at least two of said laser cavities are closed at the first side by a single common wavelength selector. Further, this objective is achieved by a method as mentioned at the outset by the further step of providing a single common wavelength selector, said single common wavelength selector serving as an input filter element having a high reflectivity over a frequency range that corresponds to one or more output wavelengths of said Raman laser thus closing more than one laser cavity at the input side.

Therefore, a further advantage of the present invention is that only one phase mask is required for writing said single common input FBG into the fiber. Hence, the phase mask can be used for manufacturing various types of Raman lasers, i.e. only one phase mask is required for a variety of different Raman lasers having different output wavelengths within the spectral reflectivity of the single common wavelength selecting Fiber Bragg Grating.

Since only one single wavelength selector is required to close a plurality of laser cavities at their respective input sides, a substantial number of wavelength selectors can be saved. Furthermore, along with the reduced number of wavelength selectors required, the number of discontinuities of a refractive index within said Raman fiber is reduced. Accordingly, losses caused by unwanted reflections are also reduced.

The single common wavelength selector covers a broader bandwidth of substantive reflection and may, therefore, be utilized in connection with a plurality of specific desired output wavelengths. Hence, the manufacturing process is simplified, because specific desired output wavelengths may be changed without changing the single common wavelength selector at the input side.

It is preferred, that said single common wavelength selector has a high reflectivity over a frequency range that corresponds to one or more output wavelengths of said Raman fiber.

Thereby, e.g. N laser cavities for N output wavelengths may be established by providing a reduced number of wavelength selectors. As an example, only N+1 wavelength selectors may be sufficient in contrast to 2*N wavelength selectors that are required with state of the art Raman lasers.

It is further preferred that said single common wavelength selector has a low reflectivity, i.e. a high transmission, in a frequency range that corresponds to one or more input or pump wavelengths of said Raman fiber in order to achieve efficient pumping within said input wavelength range without substantial insertion loss.

It is further preferred that said Fiber Bragg Grating is a chirped Fiber Bragg Grating. Chirped FBGs are characterized by a periodic variation of a grating length. In contrast thereto, the grating period of a conventional Fiber Bragg Gratings is constant. The chirp rate, that is the Bragg-wavelength displacement scaled to the length of the chirped Fiber Bragg Grating, determines the broadened spectral bandwidth.

It is even further preferred, that a specific laser cavity is closed at the second side by one of said wavelength selectors or filter elements, and in that said wavelength selector or filter element has a high reflectivity over a comparatively small frequency range that corresponds to a wavelength that is associated with said specific laser cavity.

It is further preferred that a second side of a specific laser cavity is closed by one of said wavelength selectors or filter elements, and in that said filter element has a lower reflectivity over a comparatively small frequency range that corresponds to an output wavelength that is associated with said specific laser cavity.

Said lower reflectivity of said filter element allows light of a respective wavelength to be coupled out of the cavity, e.g. in order to pump a fiber for amplifying an optical signal.

It is further preferred to provide, after the above mentioned steps of manufacturing, a specific wavelength selecting filter element for each specific desired output wavelength, thus forming a second side of a specific laser cavity, wherein a filter characteristic and/or a position of said wavelength selector or filter element determine said specific desired output wavelength.

It is this single step that determines a desired output wavelength. The step of forming the single common wavelength selector on the first side, i.e. the input side of the cavities is, in contrast thereto, not wavelength-specific within the broadened spectral bandwidth of the single common wavelength selector.

It is further preferred that said single common wavelength selector and/or said closing wavelength selectors comprise(s) a grating, in particular a Fiber Bragg Grating (FBG).

As far as the proposed method is concerned, it is preferred to provide wavelength selectors or filter elements for establishing at least one laser cavity that is not associated with an output wavelength of said Raman fiber. Said laser cavity is provided for laser operation of an optical signal having an intermediate wavelength as compared to said input wavelength and said output wavelength. Such an intermediate wavelength may be associated to a second order Stokes or to Stokes of even higher orders regarding an input wavelength. Thereby, the photon energy of a high frequency pump wave can be successively downshifted into the range associated with the desired output wavelengths.

Therefore, each but'said last step can be performed without restricting the Raman laser to a specific output wavelength. A multitude of different types of Raman lasers having different output wavelengths can thus be manufactured without having to adapt the common first steps of providing a single common wavelength selector at the input side of the cavity. Thus, the manufacturing of a Raman laser is simplified and improved by the present invention.

It is to be understood that the features mentioned above and those yet to be explained below can be used not only in the respective combinations indicated, but also in other combinations or in isolation, without leaving the scope of the present invention.

Further features and advantages of the present invention are presented in the following detailed description with reference to the drawings in which
- Figure 1: shows a first embodiment of the Raman laser according to the present invention;
- Figure 2: depicts schematically a chirped Fiber Bragg Grating;
- Figure 3: shows the spectral reflectivity of a chirped Fiber Bragg Grating and of a conventional Fiber Bragg Grating versus wavelength; and
- Figure 4: shows a first embodiment of the method of providing a Raman laser according to the present invention.

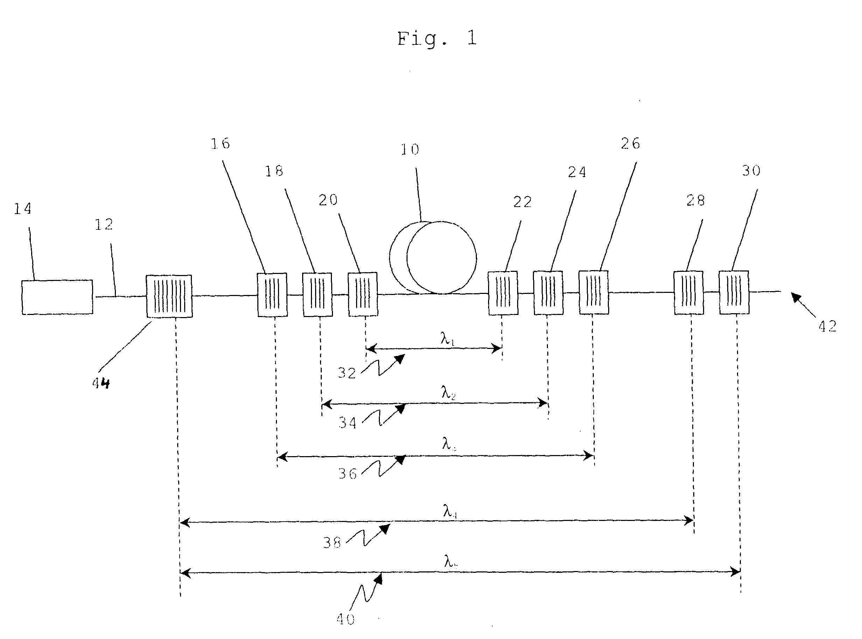

Figure 1 shows a Raman fiber 10 according to a first embodiment of the present invention. Said Raman fiber 10 is fed at a first side 12 with a pump wave emitted by a pump source 14. Pump source 14 may be a continuous wave pump laser.

Said Raman fiber 10 comprises several wavelength selectors or filter elements 16, 18, 20, 22, 24, 26, 28, and 30 that are formed by Fiber Bragg Gratings (FBG) which in the further text are referred to as FBG.

Each pair 20, 22; 18,24 and 16, 26 of FBGs forms a laser cavity 32, 34 and 36, in which lasing occurs at different wavelengths λ1, λ2, λ3, respectively. The wavelengths λ1, λ2, λ3 resonating within said laser cavities 32, 34 and 36 during laser operation are not designated as output wavelengths. Consequently, the FBGs 22, 24 and 26 are designed to have a high reflectivity within a frequency range that corresponds to the respective wavelength λ1, λ2, λ3 so that radiation of the respective wavelength λ1, λ2, λ3 is not emitted by the corresponding laser cavities 32, 34 and 36. Two more laser cavities 38, 40 are formed by the FBGs 28 and 30 at a second side 42 (output) and a single common wavelength selector 44 at the first side 12 (input) of said Raman fiber 10.

The inner cavities 32, 34 and 36 serve for selecting subsequently downshifted wavelengths that are downshifted by the Raman interaction from the pump frequency via one or more subsequent orders of Stokes to the last Stokes wavelength before the output wavelengths, i.e. the Stokes with the lowest frequency above the desired output frequencies. In other words: These cavities are used for downshifting a pump frequency into a range of desired output frequencies by Raman interaction involving subsequent Stokes.

The cavities 38 and 40 serve for generating or selecting the desired output wavelengths from the gain spectrum of the adjacent Stokes of higher frequency.

Wavelength selector 44 is characterized by a broadened spectral bandwidth, i.e. wavelength selector 44 shows a high reflectivity over a broad frequency range that covers inter alia separate desired output wavelengths λ4, λ5. Such a wavelength selector 44 may be realized as a chirped Fiber Bragg Grating.

Accordingly, the desired output wavelengths λ4, λ5 are resonating within the cavities 38, 40 in the presence of a pump signal.

Due to the utilization of the single common wavelength selector 44 for closing the cavities 38, 40 at the first side 12 of said Raman fiber 10, one FBG can be saved at said first side 12 of said Raman fiber 10. Conventional Raman lasers require separate wavelength selectors for closing separate cavities.

Therefore, a conventional Raman laser that generates the two desired output wavelengths that are emitted by the Raman laser device of Fig. 1 would need two separate wavelength selectors to substitute the single common wavelength selector 44 of Fig. 1 having a broadened spectral bandwidth.

Accordingly, the benefits concerning a reduced number of FBGs per number of output wavelengths can even be increased with an increased number of output wavelengths. For example, in the present case, three wavelength selectors 44, 28, 30 are required to form two laser cavities 38, 40. In the case of, for example, eight laser cavities, prior art approaches require sixteen FBGs at minimum, whereas the number of wavelength selectors necessary in a Raman laser according to the present invention may be reduced to 9. Said nine FBGs comprise one input FBG 44 as a single common wavelength selector for simultaneously closing eight cavities and eight FBGs, which close each of the eight cavities at the second side 42.

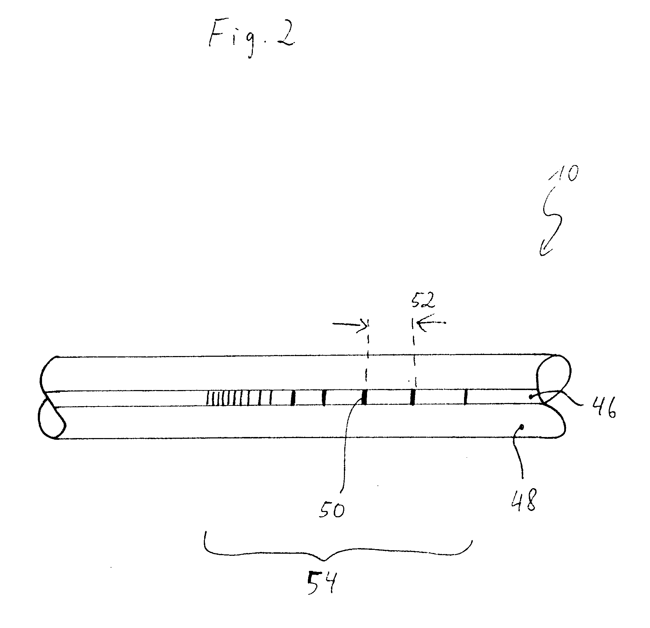

A high reflectivity over a frequency range that corresponds to at least said both output wavelengths λ4, λ5 can advantageously be achieved by a chirped FBG, which is schematically shown in Fig. 2.

In Fig. 2, fiber 10 is shown to comprise a core 46 and a cladding 48 surrounding the core 46. The core 46 comprises refractive index perturbations 50 that are located with a varying distance or grating period 52. The ensemble of refractive index perturbations 50 corresponds to a chirped Fiber Bragg Grating 54.

The grating period 52 may vary linearly or in a non-linear manner. In contrast thereto, the grating period of a conventional Fiber Bragg Grating is constant. Chirped Fiber Bragg Gratings are per se known in the art.

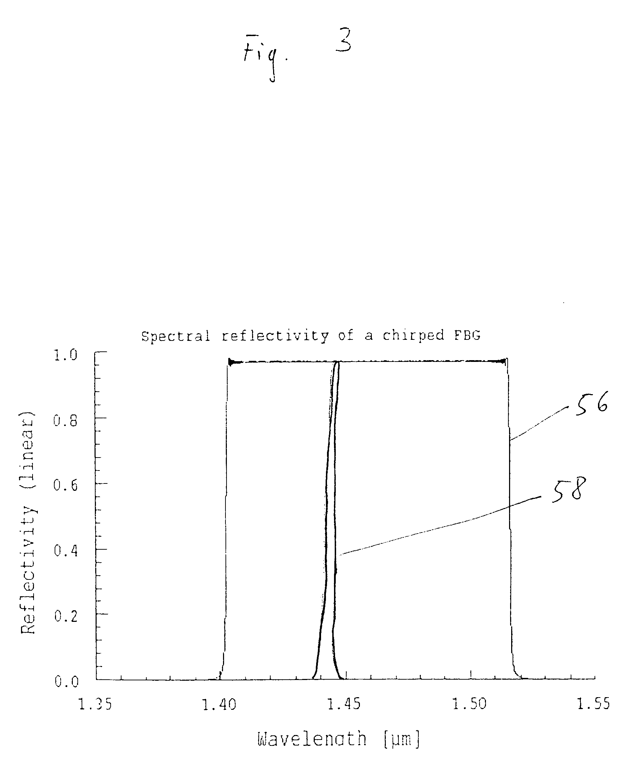

Fig. 3 shows the spectral reflectivity of both a chirped Fiber Bragg Grating (line 56) and a conventional Fiber Bragg Grating (line 58). The exemplary chirped Fiber Bragg Grating shows a bandwidth of about 120 nm, whereas the conventional Fiber Bragg Grating's bandwidth is limited to a few nm.

A chirp rate of the FBG 44 (Fig. 1) determines one or more output wavelengths λ4, λ5 of the Raman fiber 10.

On the other hand, said input FBG 44 has a low reflectivity over a frequency range that corresponds to at least a wavelength of said pump wave input by said pump source 14. Accordingly, insertion losses are avoided that could otherwise occur when a pump signal having said input wavelength is fed into the Raman fiber 10 at its first end 12.

Each of said FBGs 28, 30, which closes the laser cavities 38, 40 at the second side 42 of said Raman fiber 10, has a partial reflectivity (i.e a lower reflectivity) over a comparatively small frequency range that corresponds to the respective output wavelengths λ₄, λ₅ of the laser cavities 38, 40. Accordingly, a part of the radiation resonating within said laser cavities 38, 40 at said output wavelengths λ₄, λ₅ is emitted as output wavelengths and may be used in further optical systems (not shown), e.g. as a pump signal or the like.

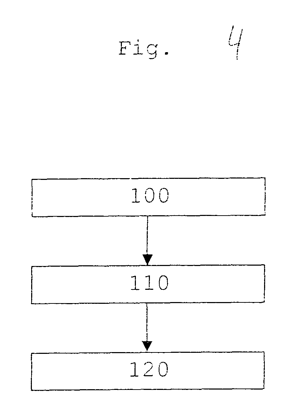

Figure 4 shows a schematic flow chart of a first embodiment of the method according to the present invention. In step 100, said single common FBG 44 (Fig. 1) is provided for closing a plurality of laser cavities 38 and 40.

In step 110 of Figure 4, FBGs 16, 18, 20, 22, 24, 26 that close cavities 32, 34, 36 that are not associated with said output wavelengths λ₄, λ₅, are provided.

In step 120, a specific filter element or wavelength selector 28, 30 is provided for each specific desired output wavelength λ4, λ5, thus closing a second side of a specific laser cavity 38, 40. The characteristic and/or a position of said wavelength selector or filter element determines said specific desired output wavelength.

It is this single step 120 that determines a desired output wavelength. The step of forming the single common wavelength selector 44 on the first side, i.e. the input side of the cavities is, in contrast thereto, not wavelength-specific within the broadened spectral bandwidth of the single common wavelength selector 44.

Therefore, each but said last step 120 can be performed without restricting the Raman fiber 10 to a specific output wavelength. A multitude of different types of Raman lasers having different output wavelengths can thus be manufactured without having to adapt the common first steps of providing a single common wavelength selector at the input side of the cavity.

To improve a selectivity between the desired output wavelengths λ4, λ5 and further wavelengths λ1, λ2, λ3 which are not to be output by said Raman laser, a further embodiment of the invention comprises wavelength selectors 22, 24, 26, 28, 30 with increased reflectivity in the output wavelength range. It is also possible to reduce a length of said Raman fiber 10 to improve the above mentioned selectivity.

## Claims

1. Raman laser comprising a Raman fiber (10) and a plurality of wavelength selectors (16, 18, 20, 22, 24, 26, 28, 30, 44) that close laser cavities (32, 34, 36, 38, 40) embedded in said Raman fiber (10) at opposing first sides (12) and second sides (42), respectively, **characterized in that** at least two of said laser cavities (32, 34, 36, 38, 40) are closed at the first side (12) by a single common wavelength selector (44).

2. The Raman laser of claim 1, **characterized in that** said single common wavelength selector (44) has a high reflectivity over a frequency range that corresponds to one or more output wavelengths (λ₄, λ₅) of said Raman fiber (10).

3. The Raman laser of claim 1 or 2, **characterized by** said single common wavelength selector (44) having a low reflectivity in a frequency range that corresponds to one or more input wavelengths for pumping said Raman laser.

4. The Raman laser of one of the preceding claims, **characterized in that** a second side of a specific laser cavity (32, 34, 36) is closed by one of said wavelength selectors (22, 24, 26), and **in that** said wavelength selectors (22, 24, 26) have a high reflectivity over a comparatively small frequency range that corresponds to a wavelength (λ₁, λ₂, λ₃) that is associated to said specific laser cavity (32, 34, 36) .

5. The Raman laser of one of the preceding claims, **characterized in that** a second side of a specific laser cavity (38, 40) is closed by one of said wavelength selectors (28, 30); and **in that** said wavelength selector (28, 30) has a lower reflectivity over a comparatively small frequency range that corresponds to an output wavelength (λ₄, λ₅) that is associated to said specific laser cavity (28, 30).

6. The Raman laser of one of the preceding claims, **characterized in that** said single common wavelength selector (44) and/or said closing wavelength selector (16, 18, 20, 22, 24, 26, 28, 30) comprise(s) a grating, in particular a Fiber Bragg Grating.

7. The Raman laser of claim 6, **characterized in that** said Fiber Bragg Grating is a chirped Fiber Bragg Grating (44, 54).

8. The Raman laser of claim 7, **characterized in that** a chirp rate of said chirped Fiber Bragg Grating (44; 54) determines a frequency range that corresponds to one or more output wavelengths (λ₄, λ₅) of said Raman fiber (10).

9. Method of manufacturing a Raman laser comprising a Raman fiber (10), said method comprising the steps of:
a. providing a plurality of wavelength selectors (16, 18, 20, 22, 24, 26, 28, 30) that close laser cavities (32, 34, 36, 38, 40) embedded in said Raman fiber (10) at opposing first sides (12) and second sides (42), respectively, **characterized by**
b. providing (100) a common wavelength selector (44) at said first side of said Raman fiber (10), said common wavelength selector (44) having a high reflectivity over a frequency range that corresponds to one or more output wavelengths (λ_{4,} λ₅ of said Raman fiber (10), thus closing more than one laser cavity (38, 40).

10. The method of claim 9, **characterized by** providing (110) wavelength selectors (16, 18, 20, 22, 24, 26) for closing at least one laser cavity (32, 34, 36) that is not associated with an output wavelength (λ4, λ5) of said Raman fiber (10).

11. The method according of claim 9 or claim 10, **characterized by** providing (120), for each specific desired output wavelength (λ₄, λ₅), a specific wavelength selector (28, 30) thus closing a second side of a specific laser cavity (38, 40), wherein a characteristic and/or a position of wavelength selector (28, 30) determine said specific desired output wavelength (λ₄, λ₅).
